# EUROPEAN PATENT SPECIFICATION

(11) **EP 3 969 139 B1**
(45) Date of publication and mention of the grant of the patent: **05.07.2023**
(21) Application number: 20727947.2
(22) Date of filing: 18.05.2020
(51) Int. Cl.: A63H 17/26

(54) **WHEEL FOR A TOY VEHICLE AND A TOY VEHICLE WITH WHEELS**
RAD FÜR EIN SPIELFAHRZEUG UND EIN SPIELFAHRZEUG MIT RÄDERN
ROUE POUR VÉHICULE JOUET ET VÉHICULE JOUET ÉQUIPÉ DE ROUES

(30) Priority: 16.05.2019 DK PA201970309
(43) Date of publication of application: 23.03.2022
(73) Proprietor: LEGO A/S, 7190 Billund (DK)
(72) Inventor: HANSEN, Jørn Skovløber, 7190 Billund (DK); LOADER, Carl Edward, 8361 Hasselager (DK)
(74) Representative: Guardian IP Consulting I/S
(86) International application number: PCT/EP2020/063776
(87) International publication number: WO 2020/229697

(56) References cited:
- GB-A- 1 232 308
- JP-A- 2006 055 347
- JP-U- S5 285 597
- US-A- 2 665 521

## Description

### Prior art:

The present invention relates to wheels for toy vehicles as well as a toy vehicle with wheels.

Many different embodiments of wheels for toy vehicles are well known in the prior art. Especially, but not only, in relation to toy vehicles having a motor such as an electric motor or a flywheel for rotating the wheel there is a risk that the spinning wheel catches some hair, a finger or another body part of the child using the toy vehicle.

In this relation JP patent application no. 2006055347 discloses an electric vehicle with wheels having a wheel cap 38 attached to the outside of the outer side wall of the wheel so that the child does not pinch fingers in a through-hole on the spinning wheel.

Document US2665521 A discloses a wheel for a toy vehicle comprising all the technical features set out in the preamble of claim 1.

### Object of the invention:

Based on this, it is the object of the present invention to provide a wheel for a toy vehicle and a toy vehicle with such a wheel, where the risk that the wheel may catch hair or pinch body parts of a child when it is spinning is significantly reduced.

According to the present invention this is obtained by having the wheel comprising an axle hub defining a wheel axis of rotation, a rim with an inboard flange and an outboard flange each having an outer diameter, and where the wheel further comprises a primary tire forming the tread of the wheel with a tread diameter and a tread width, and being attached to the axle hub between the inboard and the outboard flange such that it rotates with the axle hub, and wherein the wheel further comprises an outboard slip ring rotatably mounted between the primary tire and the outboard flange so that the outboard slip ring can rotate freely with respect to the primary tire and the axle hub about the wheel axis of rotation, and where the outboard slip ring have an outer diameter being slightly smaller than the tread diameter and larger than the outer diameter of the outboard flange.

In a preferred embodiment, the wheel further comprises an inboard slip ring rotatably mounted between the tire and the inboard flange so that it can rotate about the wheel axis with respect to the tire, the inboard slip ring having an outer diameter being slightly smaller than the tread diameter and larger than the outer diameter of the inboard flange.

The primary tire is preferably an annular ring made from a material being softer than the material of the inboard and the outboard slip rings, and having an internal annular inner edge frictionally engaging with the axle hub.

In this relation, the tread of the primary tire may preferably have a higher friction than the surface at the outer diameter of the inboard and/or the outboard slip ring.

Furthermore, the distance between the outer diameter of the inboard slip ring and the outer diameter of outboard slip ring may preferably be equal to or larger than the width of the tread.

In a further preferred embodiment, the axle hub and the outboard flange are provided by a first wheel component and the inboard flange is provided by a second wheel component, and where the second wheel component is permanently attached to the first wheel component by gluing, welding or the like.

In order to further reduce the risk that the wheel may catch hair of the child the primary tire have an annular flange arranged on each side, and the inboard slip ring and the outboard slip ring each have an annular groove arranged so that each of the annular flanges on the primary tire extends into an annular groove on the inboard slip ring and the outboard slip ring.

Furthermore the width of both the inboard slip ring and the outboard slip ring, measured in a direction parallel to the wheel axis of rotation, may preferably be equal to or larger than the corresponding width of the tread on the primary tire.

The present invention also relates to a toy vehicle having one or more wheels, and in this relation, the wheels are especially advantageous when mounted in wheels arches arranged in the vehicle body.

As mentioned in the introduction the wheels are especially advantageous when the vehicle comprises a motor and a drivetrain with one or more final drive axles, and where one of the wheels are attached to each of the final drive axles.

### The drawing:

Figure 1: Is a perspective principle drawing showing a toy vehicle with a wheel according to the invention.
Figure 2: Is a perspective cross section of the wheel shown in figure 1.
Figure 3: Is an exploded view of the cross-sectioned wheel shown in figure 2.

### Description of an embodiment:

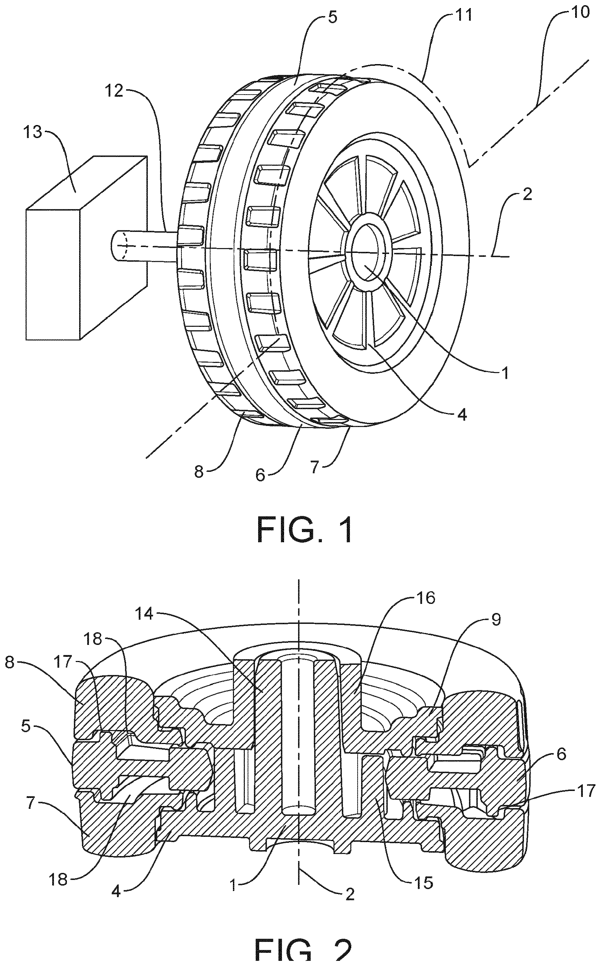

Fig. 1 shows in principle a toy vehicle with a wheel according to the invention. It is apparent to the skilled person that the present invention can be embodied in numerous different embodiments of toy vehicles. Therefore, the toy vehicle is only shown in part with dotted lines showing the outline of a part of the bottom 10 of the vehicle body having one wheel arch 11 arranged and a powertrain 13, 12 adapted for rotating the wheel. The powertrain 13, 12 may comprise any motor and suitable drive train for this purpose and it is therefore only shown in this drawing as a box being connected via the final drive axle 12 to the wheel so that it can rotate the wheel about the wheel axis of rotation 2, and having the outboard flange 4 on the curbside of the vehicle and the inboard flange 9 on the vehicle side of the wheel.

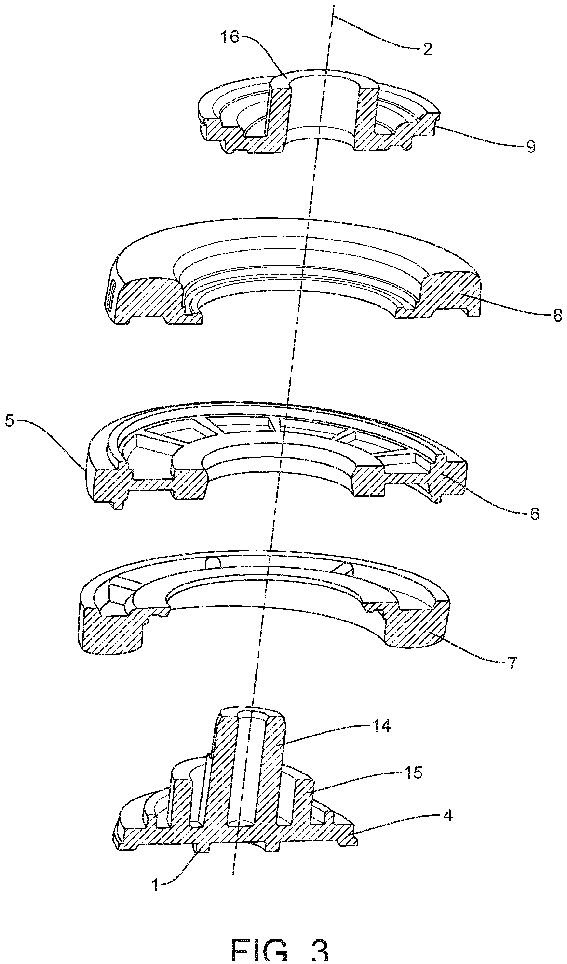

In this embodiment of the invention, the wheel comprises several components as will be explained in more detail with reference to figure 2 and 3 showing cross sections of the wheel in a perspective and exploded view respectively.

As shown on figure 2 the axle hub 1 and the outboard flange 4 is provided by a single component comprising an axle bushing 14 with a central axle bore extending along the wheel axis of rotation 2 allowing the final drive axle 12 in figure 1 to be fixed to the axle hub 1 in the axle bore. The axle hub 1 also comprises an annular spacer bushing 15 concentrically arranged about the axle bushing 14.

The inboard flange 9 is provided on a separate component having an support bushing 16 allowing that the inboard flange 9 can be firmly attached to the outside of the axle bushing 14 e.g. by welding or gluing in a position where the support bushing 16 abuts the annular spacer bushing 15 so that the distance between the inboard flange 9 and the outboard flange 4 is very exact.

According to this embodiment of the invention the primary tire 6 is arranged between the inboard flange 9 and the outboard flange 4 so that it forms a tread 5 on the outermost diameter of the wheel. The primary tire 6 thereby provides traction to the wheel as it is frictionally attached to the axle hub 1.

On the inboard side of the primary tire 6 is arranged an inboard slip ring 8 and on the outboard side of the primary tire 6 is arranged an outboard slip ring 7. The slip rings 7, 8 are arranged between the primary tire 6 and the inboard and outboard flange 9, 4 respectively. Due to the exact distance between the inboard flange 9 and the outboard flange 4 provided by the annular spacer bushing 15 then each of the slip rings 7, 8 can rotate freely about the wheel axis of rotation 2 with respect to the axle hub 1 as well as the primary tire 6. The slip rings 7, 8 are therefore unable to provide traction.

Even though the two slips rings 7, 8 and the primary tire 6 together resembles a complete tire tread of the wheel, then it is only the primary tire 6 that provides traction to the wheel and the slip rings 7, 8 will only rotate along with the primary tire as long as no obstructions are hindering them from rotating. If however an obstruction, e.g. the hair or finger of a child touches one or both of the slip rings 7, 8, then only the slip rings 7, 8 will stop rotating even though the rest of the wheel, including the primary tire 6 continues to rotate.

The primary tire 6 is preferably made from a relatively elastic or soft plastic or rubber material providing a relatively high friction, and the slip rings 7, 8 are made from a relatively hard plastic material. As the width of the tread 5 provided by the primary tire 6 and measured in a direction parallel to the wheel axis of rotation 2 is equal to or smaller than the distance between the outer diameters of the two slip rings 7, 8, then the slip rings 7, 8 provides support for the primary tire 6 so that the correct position of the tread 5 is secured even when traction is applied to the wheel.

Figure 3 shows this embodiment of the wheel is easy to assemble by first positioning the first component comprising the axle hub 1 and the the outboard flange 4 having the axle bushing 14 and the annular spacer bushing 15 pointing upwards.

Then the outboard slip ring 7, the primary tire 6 and the inboard slip ring 8 is stacked upon the first component, and at last the second component comprising the inboard flange 8 is attached to the axle bushing 14 having the support bushing 16 firmly attached to the axle bushing 14 e.g. by gluing or welding in the position shown in figure 2 having the inboard flange 9 resting on top of the annular spacer bushing 15, and so that the primary tire 6 is locked between the outboard flange 4 and the inboard flange 9, but so that the slip rings 7, 8 are still free to rotate with respect to the axle hub1 and the primary tire 6.

From the description above, it will be apparent to the skilled person that the present invention may be implemented in many different embodiments apart from the embodiment shown in the figures. Furthermore, the wheel parts of the wheel according to the invention is easy to produce in any material thanks to its simple design. It may, however, preferably be made from plastic materials by e.g. injection molding or additive manufacturing.

## Claims

1. A wheel for a toy vehicle, the wheel comprising an axle hub (1) defining a wheel axis of rotation, a rim with an inboard flange (9) and an outboard flange (4) each having an outer diameter, and where the wheel further comprises a primary tire (6) forming the tread (5) of the wheel with a tread diameter and a tread width, and being attached to the axle hub between the inboard and the outboard flange such that it rotates with the axle hub and **characterised in that**
the wheel further comprises an outboard slip ring (7) tatably mounted between the primary tire and the outboard flange so that the outboard slip ring can rotate with respect to the primary tire about the wheel axis of rotation, and where the outboard slip ring have an outer diameter being smaller than the tread diameter and larger than the outer diameter of the outboard flange.

2. A wheel according to claim 1, **characterized in, that** the wheel further comprises an inboard slip ring (8) rotatably mounted between the tire and the inboard flange so that it can rotate about the wheel axis with respect to the tire, the inboard slip ring having an outer diameter being smaller than the tread diameter and larger than the outer diameter of the inboard flange.

3. A wheel according to claim 2, **characterized in, that** the tire is an annular ring made from a material being softer than the material of the slip rings, and where the tire have an internal annular inner edge frictionally engaging with the axle hub.

4. A wheel according to claim 3, **characterized in, that** the tread of the primary tire has a higher friction than the surface at the outer diameter of the inboard and/or the outboard slip ring.

5. A wheel according to claim 3, **characterized in, that** the distance between the outer diameter of the inboard slip ring and the outer diameter of outboard slip ring is equal to or larger than the width of the tread.

6. A wheel according to claim 1, **characterized in, that** the axle hub and the outboard flange are provided by a first wheel component and the inboard flange is provided by a second wheel component, and where the second wheel component is permanently attached to the first wheel component by gluing, welding or the like.

7. A wheel according to claim 5, **characterized in, that** the primary tire has an annular flange arranged on each side, and that the inboard slip ring and the outboard slip ring each have an annular groove arranged so that each of the annular flanges on the primary tire extends into an annular groove on the inboard slip ring and the outboard slip ring.

8. A wheel according to one or more of the preceding claims, **characterized in, that** the width, measured in a direction parallel to the wheel axis of rotation, of both the inboard slip ring and the outboard slip ring is equal to or larger than the corresponding width of the tread on the primary tire.

9. A toy vehicle, **characterized in, that** it comprises one or more wheels according to one or more of the preceding claims.

10. A toy vehicle according to claim 9, **characterized in, that** one or more of the wheels each are arranged in a wheel arch in the body of the toy vehicle.

11. A toy vehicle according to claim 9, **characterized in, that** it comprises a motor and a drivetrain with one or more final drive axles, and where one of the wheels are attached to each of the final drive axles.

## Patentansprüche

1. Rad für ein Spielzeugfahrzeug, wobei das Rad eine Achsnabe (1) umfasst, die eine Drehachse des Rades definiert, eine Felge mit einem inneren Flansch (9) und einem äußeren Flansch (4), die jeweils einen Außendurchmesser aufweisen, und wobei das Rad weiter einen Hauptreifen (6) umfasst, der die Lauffläche (5) des Rades bildet, mit einem Laufflächendurchmesser und einer Laufflächenbreite, und zwischen dem inneren und dem äußeren Flansch derart an der Achsnabe angebracht ist, dass es zusammen mit der Achsnabe dreht, und **dadurch gekennzeichnet, dass**
das Rad weiter einen äußeren Gleitring (7) umfasst, der drehbar so zwischen dem Hauptreifen und dem äußeren Flansch montiert ist, dass der äußere Gleitring in Bezug auf den Hauptreifen um die Drehachse des Rades drehen kann, und wobei der äußere Gleitring einen Außendurchmesser aufweist, der kleiner als der Laufflächendurchmesser und größer als der Außendurchmesser des äußeren Flansches ist.

2. Rad nach Anspruch 1, **dadurch gekennzeichnet, dass** das Rad weiter einen inneren Gleitring (8) umfasst, der drehbar so zwischen dem Reifen und dem inneren Flansch montiert ist, dass er in Bezug auf den Reifen um die Radachse drehen kann, wobei der innere Gleitring einen Außendurchmesser aufweist, der kleiner als der Laufflächendurchmesser und größer als der Außendurchmesser des inneren Flansches ist.

3. Rad nach Anspruch 2, **dadurch gekennzeichnet, dass** es sich bei dem Reifen um einen kreisförmigen Ring aus einem Material handelt, das weicher ist als das Material der Gleitringe, und wobei der Reifen eine innenliegende kreisförmige Innenkante aufweist, die mit der Achsnabe in Reibeingriff steht.

4. Rad nach Anspruch 3, **dadurch gekennzeichnet, dass** die Lauffläche des Hauptreifens eine höhere Reibung aufweist als die Fläche am Außendurchmesser des inneren und/oder des äußeren Gleitrings.

5. Rad nach Anspruch 3, **dadurch gekennzeichnet, dass** der Abstand zwischen dem Außendurchmesser des inneren Gleitrings und dem Außendurchmesser des äußeren Gleitrings gleich oder größer ist als die Breite der Lauffläche.

6. Rad nach Anspruch 1, **dadurch gekennzeichnet, dass** die Achsnabe und der äußere Flansch von einem ersten Radbauteil bereitgestellt werden, und der innere Flansch von einem zweiten Radbauteil bereitgestellt wird, und wobei das zweite Radbauteil durch Kleben, Schweißen oder dergleichen dauerhaft am ersten Radbauteil angebracht ist.

7. Rad nach Anspruch 5, **dadurch gekennzeichnet, dass** der Hauptreifen auf jeder Seite angeordnet einen kreisförmigen Flansch aufweist, und dass der innere Gleitring und der äußere Gleitring jeweils eine kreisförmige Nut aufweisen, die so angeordnet ist, dass sich jeder der kreisförmigen Flansche am Hauptreifen in einer kreisförmigen Nut am inneren Gleitring und dem äußeren Gleitring erstreckt.

8. Rad nach einem oder mehreren der vorstehenden Ansprüche, **dadurch gekennzeichnet, dass** die in einer zur Drehachse des Rades parallelen Richtung gemessene Breite sowohl des inneren Gleitrings als auch des äußeren Gleitrings gleich oder größer ist als die entsprechende Breite der Lauffläche am Hauptreifen.

9. Spielzeugfahrzeug, **dadurch gekennzeichnet, dass** es ein oder mehrere Räder nach einem oder mehreren der vorstehenden Ansprüche umfasst.

10. Spielzeugfahrzeug nach Anspruch 9, **dadurch gekennzeichnet, dass** eines oder mehrere der Räder jeweils in einem Radkasten im Körper des Spielzeugfahrzeugs angeordnet sind.

11. Spielzeugfahrzeug nach Anspruch 9, **dadurch gekennzeichnet, dass** es einen Motor und einen Antriebsstrang mit einer oder mehreren Endantriebsachsen umfasst, und wobei an jeder der Endantriebsachsen eines der Räder angebracht ist.

## Revendications

1. Roue pour un véhicule jouet, la roue comprenant un moyeu d'essieu (1) définissant un axe de rotation de roue, une jante avec une bride intérieure (9) et une bride extérieure (4) présentant chacune un diamètre extérieur, et où la roue comprend en outre un pneu principal (6) formant la bande de roulement (5) de la roue avec un diamètre de bande de roulement et une largeur de bande de roulement, et étant attaché au moyeu d'essieu entre la bride intérieure et la bride extérieure de sorte qu'il tourne avec le moyeu d'essieu, et **caractérisée en ce que**
la roue comprend en outre un collecteur tournant extérieur (7) monté de manière rotative entre le pneu principal et la bride extérieure de sorte que le collecteur tournant extérieur puisse tourner par rapport au pneu principal autour de l'axe de rotation de roue, et où le collecteur tournant extérieur présente un diamètre extérieur qui est inférieur au diamètre de bande de roulement et supérieur au diamètre extérieur de la bride extérieure.

2. Roue selon la revendication 1, **caractérisée en ce que** la roue comprend en outre un collecteur tournant intérieur (8) monté de manière rotative entre le pneu et la bride intérieure de sorte qu'il puisse tourner autour de l'axe de roue par rapport au pneu, le collecteur tournant intérieur présentant un diamètre extérieur qui est inférieur au diamètre de bande de roulement et supérieur au diamètre extérieur de la bride intérieure.

3. Roue selon la revendication 2, **caractérisée en ce que** le pneu est un anneau annulaire fabriqué en un matériau qui est plus mou que le matériau des collecteurs tournants, et où le pneu présente un bord intérieur annulaire interne venant en prise par friction avec le moyeu d'essieu.

4. Roue selon la revendication 3, **caractérisée en ce que** la bande de roulement du pneu principal présente une friction plus élevée que celle de la surface au niveau du diamètre extérieur du collecteur tournant intérieur et/ou extérieur.

5. Roue selon la revendication 3, **caractérisée en ce que** la distance entre le diamètre extérieur du collecteur tournant intérieur et le diamètre extérieur du collecteur tournant extérieur est égale ou supérieure à la largeur de la bande de roulement.

6. Roue selon la revendication 1, **caractérisée en ce que** le moyeu d'essieu et la bride extérieure sont prévus par un premier composant de roue et la bride intérieure est prévue par un second composant de roue, et où le second composant de roue est attaché en permanence au premier composant de roue par collage, soudage ou similaire.

7. Roue selon la revendication 5, **caractérisée en ce que** le pneu principal présente une bride annulaire agencée sur chaque côté, et que le collecteur tournant intérieur et le collecteur tournant extérieur présentent chacun une rainure annulaire agencée de sorte que chacune des brides annulaires sur le pneu principal s'étende dans une rainure annulaire sur le collecteur tournant intérieur et le collecteur tournant extérieur.

8. Roue selon l'une ou plusieurs quelconques des revendications précédentes, **caractérisée en ce que** la largeur, mesurée dans une direction parallèle à l'axe de rotation de roue, des deux collecteur tournant intérieur et collecteur tournant extérieur est égale ou supérieure à la largeur correspondante de la bande de roulement sur le pneu principal.

9. Véhicule jouet, **caractérisé en ce qu'**il comprend une ou plusieurs roues selon l'une ou plusieurs quelconques des revendications précédentes.

10. Véhicule jouet selon la revendication 9, **caractérisé en ce qu'**une ou plusieurs des roues sont chacune agencées dans un passage de roue dans le corps du véhicule jouet.

11. Véhicule jouet selon la revendication 9, **caractérisé en ce qu'**il comprend un moteur et une transmission avec un ou plusieurs essieux moteur finaux, et où une des roues est attachée à chacun des essieux moteur finaux.
